(19) Europäisches Patentamt / European Patent Office / Office européen des brevets

(11) EP 4 715 677 A1

(12) EUROPEAN PATENT APPLICATION

(43) Date of publication:
25.03.2026 Bulletin 2026/13

(51) International Patent Classification (IPC):
G06N 3/094 (2023.01)    G06N 20/00 (2019.01)

(21) Application number: 25195703.1

(22) Date of filing: 13.08.2025

(52) Cooperative Patent Classification (CPC):
G06N 3/094; H04B 17/17; H04B 17/29;
H04L 41/16; G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.09.2024 US 202418895255

(71) Applicant: Viavi Solutions Inc.
Chandler, AZ 85286 (US)

(72) Inventors:
• GUPTA, Ankit
  Welwyn Garden City, AL7 3EQ (GB)

• DIZDAR, Onur
  London, W4 3DF (GB)
• CHEN, Yun
  Stevenage, SG2 9AG (GB)
• LEUNG, Chi-ming
  Hardwick, CB23 7XL (GB)
• WANG, Stephen
  London, SW6 6NG (GB)
• REDGATE, David
  Hitchin, SG4 8NG (GB)
• BABAR, Zunaira
  Hitchin, SG4 9FJ (GB)

(74) Representative: Murgitroyd & Company
165-169 Scotland Street
Glasgow G5 8PL (GB)

(54) BASE STATION TESTING SYSTEM CONFIGURED TO TEST A NEURAL NETWORK OF AN ARTIFICIAL INTELLIGENCE MODULE OF A RECEIVER

(57) In some implementations, a base station testing system obtains model information associated with a neural network (NN) of an artificial intelligence (AI) receiver module of a receiver, training information associated with the NN; and the NN. The base station testing system determines one or more test cases for testing the NN and determines respective testing conditions associated with the one or more test cases. The base station testing system generates, based on the respective testing conditions, respective test case data associated with the one or more test cases. The base station testing system determines, based on testing the NN using the respective test case data associated with the one or more test cases, performance information associated with the NN, and generates, based on determining the performance information, a performance report associated with the NN.

FIG. 5

EP 4 715 677 A1

**Description**

BACKGROUND

To communicate wirelessly, a transmitting device may convert a stream of bits into wireless signals (e.g., radio frequency (RF) signals). A receiving device may receive wireless signals from the transmitting device and convert the received wireless signals back into bits. The receiving device may use hard coding to map each data symbol (from the received wireless signals) to a '1' or a '0' or may use soft coding to map each data symbol (from the received wireless signals) to a log likelihood ratio (LLR) value.

SUMMARY

According to an aspect, there is provided a base station testing system, comprising:

one or more memories; and
one or more processors, communicatively coupled to the one or more memories, configured to:

obtain model information associated with a neural network, NN, of an artificial intelligence, AI, receiver module of a receiver;
obtain training information associated with the NN;
obtain the NN;
determine one or more test cases for testing the NN;
determine respective testing conditions associated with the one or more test cases;
generate, based on the respective testing conditions, respective test case data associated with the one or more test cases;
determine, based on testing the NN using the respective test case data associated with the one or more test cases, performance information associated with the NN; and
generate, based on determining the performance information, a performance report associated with the NN.

In some embodiments, the performance report includes at least one of:

the model information,
the training information,
information indicating the one or more test cases,
information indicating the respective testing conditions associated with the one or more test cases,
the performance information, or
result information.

In some embodiments, the one or more processors, to determine the one or more test cases, are configured to:

identify another NN that was previously tested;
obtain a historical performance report associated with the other NN;
identify a plurality of historical test cases indicated by the historical performance report;
determine, using a clustering technique and based on the plurality of historical test cases, a plurality of clusters associated with the plurality of historical test cases; and
determine, based on the plurality of clusters, the one or more test cases.

In some embodiments, the one or more processors, to determine the one or more test cases, are configured to:

identify one or more other NNs that were previously tested;
obtain respective historical model information associated with the one or more other NNs and respective historical training information associated with the one or more other NNs;
identify, based on at least one of the model information associated with the NN and the training information associated with the NN, and based on at least one of the respective historical model information associated with the one or more other NNs and the respective historical training information associated with the one or more other NNs, a set of one or more similar other NNs that are similar to the NN;
identify a plurality of historical test cases that were used to test the set of one or more similar other NNs;
determine, using a clustering technique, a plurality of clusters associated with the plurality of historical test cases;

identify, based on testing the NN in association with a portion of the plurality of historical test cases, and based on determining the plurality of clusters associated with the plurality of historical test cases, a particular similar other NN of the set of one or more similar other NNs; and
determine, based on identifying the particular similar other NN, the one or more test cases.

In some embodiments, the one or more processors, to generate the respective test case data associated with the one or more test cases, are configured to:

identify that a test case, of the one or more test cases, is associated with stress testing or generalizability testing of the NN; and
generate, for the test case, test case data associated with at least one of:

SNR parameters associated with the AI receiver module of the receiver,
stochastic channel parameters associated with the AI receiver module of the receiver,
Doppler parameters associated with the AI receiver module of the receiver, delay spread parameters associated with the AI receiver module of the receiver, interference signal parameters associated with the AI receiver module of the receiver,
subcarrier spacing parameters associated with the AI receiver module of the receiver,
carrier frequency parameters associated with the AI receiver module of the receiver, or
fast Fourier transform, FFT, size parameters associated with the AI receiver module of the receiver.

In some embodiments, the one or more processors, to generate the respective test case data associated with the one or more test cases, are configured to:

identify that a test case, of the one or more test cases, is associated with sensitivity testing of the NN; and
generate, for the test case, test case data associated with at least one of:

clipping parameters associated with the AI receiver module of the receiver,
non-linearity parameters associated with the AI receiver module of the receiver,
in-phase and quadrature-phase, IQ, imbalance parameters associated with the AI receiver module of the receiver,
phase noise, PN, parameters associated with the AI receiver module of the receiver,
carrier frequency offset, CFO, parameters associated with the AI receiver module of the receiver, or
sampling clock offset, SCO, parameters associated with the AI receiver module of the receiver.

In some embodiments, the one or more processors, to generate the respective test case data associated with the one or more test cases, are configured to:

identify that a test case, of the one or more test cases, is associated with sensitivity testing of the NN; and
generate, for the test case, test case data by performing at least one of:

removing pilot symbols that are included in wireless signals, or
increasing noise associated with the pilot symbols that are included in the wireless signals.

In some embodiments, the one or more processors, to generate the respective test case data associated with the one or more test cases, are configured to:

identify that a test case, of the one or more test cases, is associated with adversarial testing of the NN;
determine, based on identifying that the test case is associated with adversarial testing of the NN, direction sensitivity estimation information associated with a wireless signal;
determine, based on the direction sensitivity estimation information associated with the wireless signal, perturbation selection information associated with the wireless signal; and
generate, for the test case, and based on the perturbation selection information associated with the wireless signal, test case data associated with the wireless signal.

In some embodiments, the one or more processors are further configured to:
perform, based on the test case data associated with the wireless signal, a model modification operation to update the NN.
In some embodiments, the one or more processors, to generate the performance report, are configured to:

identify another NN that was previously tested;

obtain historical model information associated with the other NN, historical training information associated with the other NN, and a historical performance report associated with the other NN;

perform, based on at least one of the historical model information, the historical training information, or the historical performance report, a model training operation to train a machine learning model to associate historical test cases with historical performance information;

determine, based on processing the one or more test cases using the machine learning model, first estimation information associated with the other NN;

determine, based on the performance information and the first estimation information, evaluation information that indicates at least one of:

confidence value information associated with the machine learning model,
precision information associated with the machine learning model,
recall information associated with the machine learning model, or
accuracy information associated with the machine learning model;

determine, based on the evaluation information, that an evaluation threshold is satisfied;

determine, based on determining that the evaluation threshold is satisfied and based on the historical performance report, one or more other test cases that are different than the one or more test cases;

determine, based on processing the one or more other test cases using the machine learning model, second estimation information associated with the other NN; and

generate the performance report to include the second estimation information.

According to another aspect, there is provided a base station testing system, comprising: one or more processors configured to:

determine one or more test cases for testing a neural network, NN, of an artificial intelligence, AI, receiver module of a receiver;

generate respective test case data associated with the one or more test cases;

determine, based on testing the NN using the respective test case data associated with the one or more test cases, performance information associated with the NN; and

generate, based on determining the performance information, a performance report associated with the NN.

In some embodiments, the one or more processors, to determine the one or more test cases, are configured to:

obtain a historical performance report associated with another NN that was previously tested;

determine, using a clustering technique and based on a plurality of historical test cases indicated by the historical performance report, a plurality of clusters associated with the plurality of historical test cases; and

determine, based on the plurality of clusters, the one or more test cases.

In some embodiments, the one or more processors, to determine the one or more test cases, are configured to:

identify a set of one or more similar other NNs that are similar to the NN;

identify a plurality of historical test cases that were used to test the set of one or more similar other NNs; and

determine, based on testing the NN in association with a portion of the plurality of historical test cases, and based on determining a plurality of clusters associated with the plurality of historical test cases, the one or more test cases.

In some embodiments, the one or more processors, to generate the respective test case data associated with the one or more test cases, are configured to:

generate, for a test case, of the one or more test cases, test case data by performing at least one of:

removing pilot symbols that are included in wireless signals, or
increasing noise associated with the pilot symbols that are included in the wireless signals.

In some embodiments, the one or more processors, to generate the respective test case data associated with the one or more test cases, are configured to:

determine direction sensitivity estimation information associated with a wireless signal;

determine, based on the direction sensitivity estimation information associated with the wireless signal, perturbation selection information associated with the wireless signal; and

generate, for a test case, of the one or more test cases, and based on the perturbation selection information associated with the wireless signal, test case data associated with the wireless signal.

In some embodiments, the one or more processors are further configured to:
perform, based on the test case data associated with the wireless signal, a model modification operation to update the NN.

In some embodiments, the one or more processors, to generate the performance report, are configured to:

identify another NN that was previously tested;

perform, based on identifying the other NN, a model training operation to train a machine learning model to associate historical test cases with historical performance information;

determine, based on processing the one or more test cases using the machine learning model, first estimation information associated with the other NN;

determine, based on the performance information and the first estimation information, that an evaluation threshold associated with the machine learning model is satisfied;

determine, based on determining that the evaluation threshold is satisfied and based on a historical performance report associated with the other NN, one or more other test cases that are different than the one or more test cases;

determine, based on processing the one or more other test cases using the machine learning model, second estimation information associated with the other NN; and

generate the performance report to include the second estimation information.

According to a further aspect, there is provided a method, comprising:

determining, by a base station testing system, one or more test cases for testing a neural network, NN, of an artificial intelligence, AI, receiver module of a receiver;

determining, by the base station testing system, respective testing conditions associated with the one or more test cases;

generating, by the base station testing system and based on the respective testing conditions, respective test case data associated with the one or more test cases;

determining, by the base station testing system and based on testing the NN using the respective test case data associated with the one or more test cases, performance information associated with the NN; and

generating, by the base station testing system and based on determining the performance information, a performance report associated with the NN.

In some embodiments, determining the one or more test cases comprises:

obtaining a historical performance report associated with another NN that was previously tested;

determining a plurality of clusters associated with a plurality of historical test cases associated with the other NN; and

determining, based on the plurality of clusters, the one or more test cases.

In some embodiments, generating the performance report comprises:

performing, based on identifying another NN that was previously tested, a model training operation to train a machine learning model to associate historical test cases with historical performance information;

determining, based on a historical performance report associated with the other NN, one or more other test cases that are different than the one or more test cases;

determining, based on processing the one or more other test cases using the machine learning model, estimation information associated with the other NN; and

generating the performance report to include the estimation information.

BRIEF DESCRIPTION OF THE DRAWINGS

Fig. 1 is a diagram of an example implementation associated with a base station testing system configured to test an NN of an AI module of a receiver.
Fig. 2 is a diagram of an example environment in which systems and/or methods described herein may be implemented.

Fig. 3 is a diagram of example components of a device associated with a base station testing system configured to test an NN of an AI module of a receiver.

Figs. 4A-4B are diagrams of an example implementation associated with a base station testing system configured to test an NN of an AI module of a receiver.

Fig. 5 is a flowchart of an example process associated with a base station testing system configured to test an NN of an AI module of a receiver.

DETAILED DESCRIPTION

The following detailed description of example implementations refers to the accompanying drawings. The same reference numbers in different drawings may identify the same or similar elements.

To communicate wirelessly, a transmitting device may convert a digital signal (e.g., representing a sequence of data symbols) into wireless signals (e.g., radio frequency (RF) signals). A receiving device may receive the wireless signals from the transmitting device and convert the received wireless signals into a digital signal. The receiving device may use hard decoding to decode the digital signal into a sequence of data symbols (e.g., a sequence of bits) or may use soft decoding to decode the digital signal into a sequence of probabilities (e.g., log likelihood ratio (LLR) values).

Decoding wireless signals consumes power and processing resources, and any errors in decoding that cannot be corrected (e.g., using error correction codes) may result in retransmissions. Retransmissions consume additional power and processing resources and increase network overhead and congestion.

Advances in artificial intelligence (AI) enable the receiving device to include an AI receiver module, which can include a neural network (NN) to improve device decoding accuracy and thus reduce retransmissions. Because the receiver device needs to be able to operate at different sites, in different scenarios, and with different configurations, testing the NN to determine whether the NN is able to handle all potential operating conditions of the receiver device is difficult and, in some cases, is not practical. Consequently, a testing system can neglect to test particular operating conditions, and performance issues associated with the NN that correspond to the particular operating conditions often go unnoticed. The receiver device, when deployed and when using the NN, may then inaccurately process wireless signals, which creates noise, interference, and other errors that degrade a communication performance of the receiver device. This can result in inefficient resource allocation, dropped connections, and reduced data throughput of the receiver device.

Some implementations described herein include a base station testing system. The base station testing system is configured to test an NN (e.g., a neural network, a spiking neural network, a neuromorphic neural network, a binary neural network, and/or another kind of neural network) of an AI receiver module of a receiver. The receiver may be, for example, included in a base station.

In some implementations, the base station testing system obtains the NN (e.g., from the base station), model information associated with the NN, and/or training information associated with the NN. The base station testing system then determines one or more test cases for testing the NN. For example, the base station testing system may determine the one or more test cases to include respective test cases for stress testing or generalizability testing of the NN, standardized conformance testing of the NN, sensitivity testing of the NN, and adversarial testing of the NN. In some implementations, the base station testing system identifies one or more other NNs that were previously tested (e.g., by the base station testing system or by another base station testing system). Accordingly, the base station testing system determines (e.g., dynamically determines) the one or more test cases based on historical test cases used to test the one or more other NNs.

In this way, the base station testing system is able to dynamically determine test cases that are relevant to testing the NN, and to omit test cases that are not relevant to testing the NN. Accordingly, the base station testing system reduces a utilization power and processing resources that would otherwise be used to test the NN in association with test cases that are not relevant to a practical operation of the NN.

In some implementations, the base station testing system generates respective test case data associated with the one or more test cases. For example, the base station testing system may generate particular test case data depending on whether the one or more test cases includes test cases for stress testing or generalizability testing of the NN, standardized conformance testing of the NN, sensitivity testing of the NN, or adversarial testing of the NN. The base station testing system then tests the NN (e.g., using the respective test case data) and the base station testing system thereby determines performance information associated with the NN (e.g., as a result of testing the NN).

The base station testing system generates a performance report associated with the NN, which may include, for example, at least one of: the model information associated with the NN, the training information associated with the NN, information indicating the one or more test cases, information indicating the respective testing conditions associated with the one or more test cases, the performance information, or result information (e.g., that indicates, for a test case, of the one or more test cases, whether the test case is a passed test case or a failed test case). In some implementations, the base station testing system generates the performance report to include estimation information. The base station testing system may train a machine learning model, based on a historical performance report associated with another NN, to associate historical test cases with historical performance information. Thus, the base station testing system may identify and process, using the machine learning model, one or more other test cases to determine the estimation information.

In this way, the base station testing system is able to generate a performance report that includes "real" performance information and/or result information associated with first test cases that the base station testing system used to test the NN and "predicted" performance information and/or result information associated with second test cases that the base station testing system did not use to test the NN. This reduces a utilization power and processing resources that would otherwise be used to test the NN in association with the second test cases. Further, because the base station testing system uses a machine learning model to process the second test cases, the base station testing system is able to determine, in some cases, predicted performance information and/or result information for test cases that the base station testing system would not otherwise be able to test (e.g., because of time and/or resource constraints). This increases a likelihood that any issues associated with the NN are identified and addressed. Thus, when the base station is deployed and using the NN, the base station is less likely to inaccurately process wireless signals, and therefore a communication performance of the base station is improved. This can result in more efficient resource allocation, fewer dropped connections, and increased throughput of the base station.

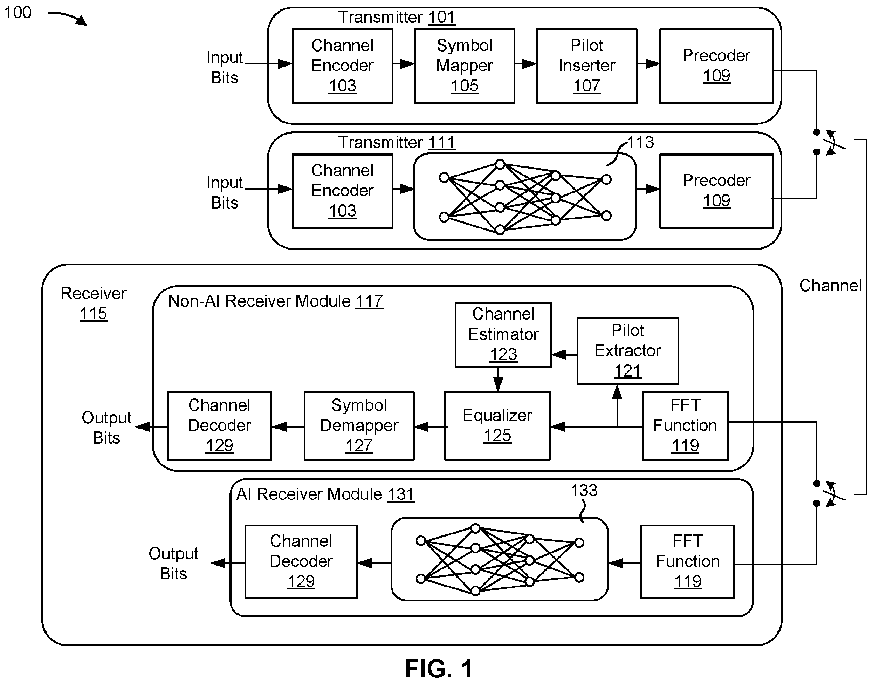

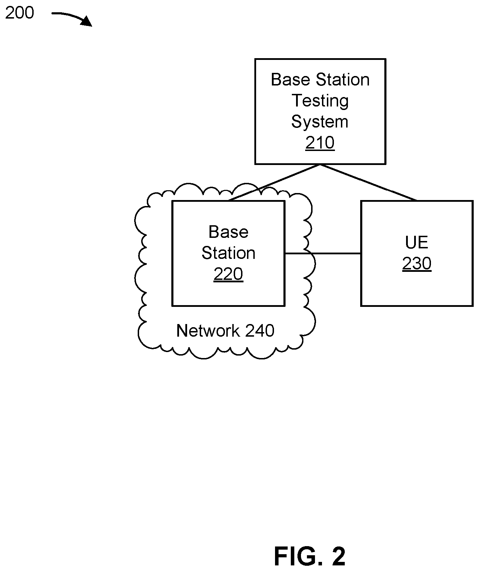

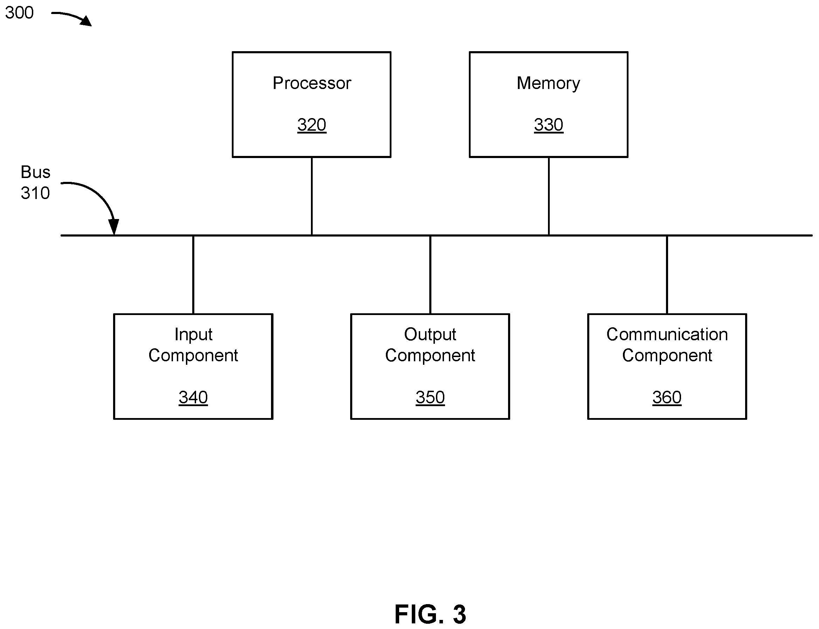

Fig. 1 is a diagram of an example implementation 100 associated with a base station testing system configured to test an NN of an AI module of a receiver. As shown in Fig. 1, example implementation 100 includes a transmitter 101, a transmitter 111, and a receiver 115. These devices are described in more detail below in connection with Fig. 2 and Fig. 3.

As shown in Fig. 1, the transmitter 101 passes a set of input bits through a channel encoder 103. The channel encoder 103 may use forward error correction (FEC) to add error-correcting codes (ECCs) to the set of input bits (e.g., resulting in a set of coded bits). The transmitter 101 further includes a symbol mapper 105 that modulates the set of coded bits by complex baseband symbols (e.g., resulting in a sequence of symbols). In some implementations, the transmitter 101 includes a pilot inserter 107 that inserts pilot symbols (e.g., known to the receiver 115) at specific locations in the sequence of symbols. The transmitter 101 may also include a precoder 109 that applies precoding to the sequence of symbols. The transmitter 101 may apply an inverse fast Fourier transform (IFFT) function on precoded output (and optionally append a cyclic prefix (CP)) to result in time domain samples that are transmitted over-the-air by a set of antennas of the transmitter 101 as wireless signals (e.g., over a channel, as shown in Fig. 1).

The transmitter 111 is similar to the transmitter 101 in that the transmitter 111 includes a channel encoder 103 and a precoder 109. However, the transmitter 111 includes a transmitter neural network (NN) 113, instead of a symbol mapper 105 and a pilot inserter 107. Accordingly, as further shown in Fig. 1, the transmitter 111 passes a set of input bits through the channel encoder 103. The channel encoder 103 may use FEC to add ECCs to the set of input bits (e.g., resulting in a set of coded bits), and the transmitter NN 113 generates, based on the set of coded bits, a sequence of symbols. The precoder 109 then applies precoding to the sequence of symbols. The transmitter 111 may apply an IFFT function on precoded output (and optionally append a CP) to result in time domain samples that are transmitted over-the-air by a set of antennas of the transmitter 111 as wireless signals (e.g., over a channel, as shown in Fig. 1).

In this way, the transmitter 101 and the transmitter 111 are respectively configured to transmit wireless signals. Because the wireless signals transmitted by the transmitter 101 include pilot symbols, these wireless signals are referred to herein as "pilot wireless signals," and because the wireless signals transmitted by the transmitter 111 do not include pilot symbols, these wireless signals are referred to herein as "pilotless wireless signals."

Wireless signals (e.g., pilot wireless signals or pilotless wireless signals) are received over-the-air by a set of antennas of the receiver 115 (e.g., over the channel). The receiver 115 may then select one of a non-AI receiver module 117 and an AI receiver module 131 (e.g., a neural receiver module, a neuromorphic receiver module, or another type of AI receiver module) to process the wireless signals.

In some implementations, the receiver 115 (e.g., using the non-AI receiver module 117) may remove the CP from the wireless signals and, as further shown in Fig. 1, may include, in the non-AI receiver module 117, a fast Fourier transform (FFT) function 119 that converts the wireless signals into frequency domain samples. For example, a frequency domain signal obtained by the receiver 115 may be represented as

$$y_{mn} = h_{mn}x_{mn} + n_{mn},$$

where $x_{mn} \in \mathbb{C}$ (i.e., the set of complex numbers) represents a wireless signal from the transmitter 101, $y_{mn} \in \mathbb{C}$ represents a wireless signal at the receiver 115, $n_{mn} \in \mathbb{C}$ represents noise (e.g., additive white Gaussian noise (AWGN) with variance $N_0$, for $m \in \{0, ... , M - 1\}$ and $n \in \{0, ... , N - 1\}$), and $h_{mn} \in \mathbb{C}$ represents the channel between either the transmitter 101 or the transmitter 111 and the receiver 115 (or an effective channel, which is a multiplication of precoding and channel vectors).

The receiver 115 may further include, in the non-AI receiver module 117, a pilot extractor 121 that determines the pilot symbols (e.g., when the wireless signals are pilot wireless signals) and a channel estimator 123 that uses the pilot symbols to perform channel estimation over the pilot symbols. One example channel estimation algorithm is Least Squares (LS). For example, a channel estimate obtained by an LS algorithm (e.g., represented by $\hat{h}_{ij} \in \mathbb{C}$ and having an error variance represented by $\sigma_{ij}^2 \in \mathbb{R}$) may be represented as

$$\hat{h}_{ij} = \frac{y_{ij}p_{ij}^*}{|p_{ij}|^2} = h_{ij} + \tilde{h}_{ij},$$

and

$$\sigma_{in}^2 = \mathbb{E}\left[\tilde{h}_{ij}\tilde{h}_{ij}^*\right] = \frac{N_0}{|p_{ij}|^2},$$

where $\tilde{h}_{ij} \in \mathbb{C}$ represents an estimation error, $(\cdot)^*$ represents a conjugate operation, $y_{ij}$ represents the frequency domain signal, and $p_{ij}$ represents the pilot symbols.

The receiver 115 may use an interpolation mechanism to interpolate channel estimates and error variances in remaining symbols (e.g., orthogonal frequency-division multiplexed (OFDM) symbols) and OFDM subcarriers carrying data symbols. The receiver 115 may perform interpolation over time and/or frequency across pilot subcarriers. One example interpolation mechanism is a piecewise-constant interpolation method that assumes that the channel stays constant between two pilot locations. For example, if $k_1$ and $k_2$ represent two OFDM symbol indices carrying pilot symbols represented by $Q_P = k_2 - k_1$, channel estimates for remaining OFDM symbols (e.g., represented by $\hat{h}_{mn} \in \mathbb{C}$) may be represented as

$$\hat{h}_{mn} = \mu_m \hat{h}_{k_1 n} + (1 - \mu_m)\hat{h}_{k_2 n},$$

where $\mu_m = m/Q_P$.

As further shown in Fig. 1, the receiver 115 may include, in the non-AI receiver module 117, an equalizer 125 that uses interpolated channel estimates to perform equalization on data symbols (e.g., represented by $y_{m'n} \in \mathbb{C}$, where $m' \in \{m \neq i\}$) to determine estimated data symbols (e.g., represented by $\hat{x}_{m'n} \in \mathbb{C}$). One example equalization is linear minimum mean square error (LMMSE) equalization, which may be represented as

$$\hat{x}_{m'n} = \left((\hat{h}_{m'n})^H \hat{h}_{m'n} + \sigma_{m'}^2 I\right)(\hat{h}_{m'n})^H y_{m'n},$$

where $\sigma_m^2$, represents an error variance for a data symbol with index m'.

The receiver 115 may further include, in the non-AI receiver module 117, a symbol demapper 127 that determines soft probabilistic outputs (e.g., LLRs). An LLR for the $l^{th} = 0, ..., B - 1$ bit of a symbol, where $B$ represents a total number of bits per symbol, may be represented as

$$LLR_{m'n}^l = \ln\left(\frac{\Pr(b^l = 1 | \hat{x}_{m'n}^l)}{\Pr(b^l = 0 | \hat{x}_{m'n}^l)}\right) \approx \ln\left(\frac{\sum_{c \in \mathcal{C}_{l,1}} exp\left(-\left|\hat{x}_{m'n}^l - c\right|^2 / \sigma_{m'}^2\right)}{\sum_{c \in \mathcal{C}_{l,0}} exp\left(-\left|\hat{x}_{m'n}^l - c\right|^2 / \sigma_{m'}^2\right)}\right),$$

where $\Pr(b^l = 1 | \hat{x}_{m'n}^l)$ represents a conditional probability that a given symbol $\hat{x}_{m'n}^l$ represents a transmitted bit of 1 (e.g., $b^l = 1$), and $\mathcal{C}_{l,1}$ represents a constellation point where the $l^{th}$ bit is equal to 1. The receiver 115 may include, in the non-AI receiver module 117, a channel decoder 129 that converts the soft probabilistic outputs from the symbol demapper 127 into a set of decoded bits. The channel decoder 129 may use the ECCs added by the channel encoder 103 in order to perform error correction and obtain the set of input bits from the transmitter 101.

As further shown in Fig. 1, the AI receiver module 131 may use an NN 133 (e.g., a receiver NN 133) to replace the pilot extractor 121, the channel estimator 123, the equalizer 125, and the symbol demapper 127. Therefore, the NN 133 may accept a digital signal (e.g., a frequency domain sample from the FFT function 119) as input. The NN 133 may output soft probabilistic outputs (e.g., LLRs), and thus the channel decoder 129, of the AI receiver module 131, may convert the soft probabilistic outputs from the NN 133 into a set of decoded bits. Because the NN 133 performs channel estimation and equalization in addition to symbol demapping, performance is improved as compared with using separate machine learning models to replace separate components of the non-AI receiver module 117. In some implementations, the NN 133 includes a neural network, a spiking neural network, a neuromorphic neural network, a binary neural network, and/or another kind of neural network.

As indicated above, Fig. 1 is provided as an example. Other examples may differ from what is described with regard to Fig. 1.

Fig. 2 is a diagram of an example environment 200 in which systems and/or methods described herein may be implemented. As shown in Fig. 2, environment 200 may include a base station testing system 210, a base station 220, a user equipment (UE) 230, and a network 240. Devices of environment 200 may interconnect via wired connections, wireless connections, or a combination of wired and wireless connections.

The base station testing system 210 includes one or more devices capable of communicating with the base station 220, the UE 230, and/or a network (e.g., the network 240), such as to train and/or manage a model (e.g., an NN) used by the base station 220 and/or by the UE 230. The base station testing system 210 may communicate with the base station 220 and/or the UE 230 by a wired connection, as described elsewhere herein. In some implementations, the base station testing system 210 may wirelessly communicate with the base station 220 and/or the UE 230.

The base station testing system 210 may include a communication and/or computing device, such as a server, an application server, a client server, a web server, a database server, a host server, a proxy server, a virtual server (e.g., executing on computing hardware), a server in a cloud computing system, or a similar type of device. The base station testing system 210 may be configured to test an NN of an AI module of a receiver (e.g., of the base station 220), as described herein.

The base station 220 includes one or more devices capable of communicating with a UE using a cellular radio access technology (RAT). For example, the base station 220 may include a base transceiver station, a radio base station, a node B, an evolved node B (eNB), a gNB, a base station subsystem, a cellular site, a cellular tower (e.g., a cell phone tower or a mobile phone tower), an access point, a transmit receive point (TRP), a radio access node, a macrocell base station, a microcell base station, a picocell base station, a femtocell base station, or a similar type of device. The base station 220 may transfer traffic between a UE (e.g., using a cellular RAT), other base stations 220 (e.g., using a wireless interface or a backhaul interface, such as a wired backhaul interface), and/or the network 240. The base station 220 may include a transmitter (e.g., the transmitter 101 and/or the transmitter 111) and/or a receiver (e.g., the receiver 115). Accordingly, the base station 220 may include a receiver that includes a non-AI receiver module (e.g., the non-AI receiver module 117) and/or an AI receiver module (e.g., the AI receiver module 131). The base station 220 may provide one or more cells that cover geographic areas. Some base stations 220 may be mobile base stations. Some base stations 220 may be capable of communicating using multiple RATs.

In some implementations, the base station 220 may perform scheduling and/or resource management for UEs covered by the base station 220 (e.g., UEs covered by a cell provided by the base station 220). In some implementations, the base station 220 may be controlled or coordinated by a network controller, which may perform load balancing and/or network-level configuration. The network controller may communicate with the base station 220 via a wireless or wireline backhaul. In some implementations, the base station 220 may include a network controller, a self-organizing network (SON) module or component, or a similar module or component. In other words, the base station 220 may perform network control, scheduling, and/or network management functions (e.g., for other base stations 220 and/or for uplink, downlink, and/or sidelink communications of UEs covered by the base station 220). In some implementations, the base station 220 may include a central unit and multiple distributed units. The central unit may coordinate access control and communication with regard to the multiple distributed units. The multiple distributed units may provide UEs and/or other base stations 220 with access to the network 240. In some implementations, the base station 220 may be capable of multiple input multiple output (MIMO) communication (e.g., beamformed communication).

The UE 230 may include one or more devices capable of communicating with the base station 220 and/or a network (e.g., the network 240). For example, the UE 230 may include a wireless communication device, a radiotelephone, a personal communications system (PCS) terminal (e.g., that may combine a cellular radiotelephone with data processing and data communications capabilities), a smart phone, a laptop computer, a tablet computer, a personal gaming system, user equipment, and/or a similar device. The UE 230 may be capable of communicating using uplink (e.g., UE to base station) communications, downlink (e.g., base station to UE) communications, and/or sidelink (e.g., UE-to-UE) communications. In some implementations, the UE 230 may include a machine-type communication (MTC) UE, such as an evolved or enhanced MTC (eMTC) UE. In some implementations, the UE 230 may include an Internet of Things (IoT) UE, such as a narrowband IoT (NB-IoT) UE.

The UE 230 may function as a receiver for downlink communications and as a transmitter for uplink communications. Similarly, the base station 220 may function as a transmitter for downlink communications and as a receiver for uplink communications. Other wireless transmitters and receivers may be used (e.g., Bluetooth® devices, WiFi® devices, among other examples) instead of the UE 230 and/or the base station 220.

The network 240 includes one or more wired and/or wireless networks. For example, the network 240 may include a cellular network (e.g., a long-term evolution (LTE) network, a code division multiple access (CDMA) network, a third generation (3G) network, a fourth generation (4G) network, a fifth generation (5G) network, or another type of next generation network), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, and/or a combination of these or other types of networks.

The quantity and arrangement of devices and networks shown in Fig. 2 are provided as one or more examples. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with a base station testing system configured to test an NN of an AI module of a receiver. The device 300 may correspond to a base station testing system 210, a base station 220, and/or a UE 230. In some implementations, a base station testing system 210, a base station 220, and/or a UE 230 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

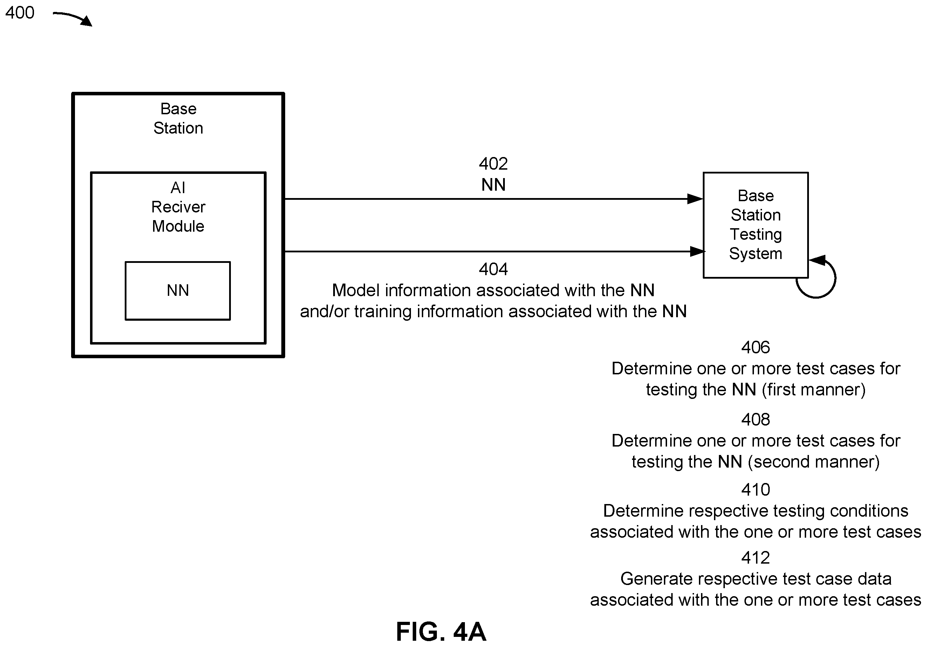

Figs. 4A-4B are diagrams of an example implementation 400 associated with a base station testing system configured to test an NN of an AI module of a receiver. As shown in Figs. 4A-4B, example implementation 400 includes a base station and a base station testing system. These devices are described in more detail in connection with Fig. 2 and Fig. 3.

As shown in Fig. 4A, and by reference number 402, the base station testing system may obtain an NN (e.g., the NN 133) of an AI receiver module (e.g., the AI receiver module 131) of a receiver (e.g., the receiver 115), which may be included in the base station. In some implementations, the base station may send the NN to the base station testing system, such as via a connection between the base station and the base station testing system, and the base station testing system may therefore obtain the NN (e.g., by receiving the NN from the base station via the connection). Alternatively, the NN may be stored in a data structure (e.g., that is included in and/or that is accessible to the base station testing system), and the base station testing system may obtain the NN by communicating with the data structure (e.g., to retrieve the NN from the data structure). As described herein, the NN may be (or may include) a neural network, a spiking neural network, a neuromorphic neural network, a binary neural network, and/or another kind of neural network. The NN may be a trained NN (e.g., that was trained using training information described herein in relation to reference number 404).

As shown by reference number 404, the base station testing system may obtain model information associated with the NN and/or training information associated with the NN. In some implementations, the base station may send the model information and/or the training information to the base station testing system, such as via the connection between the base station and the base station testing system, and the base station testing system may therefore obtain the model information and/or the training information (e.g., by receiving the model information and/or the training information from the base station via the connection). Alternatively, the NN may be stored in the data structure (or a different data structure), and the base station testing system may obtain the model information and/or the training information by communicating with the data structure (e.g., to retrieve the model information and/or the training information from the data structure).

The model information associated with the NN may indicate, for example, a type of the NN (e.g., whether the NN is an artificial NN, a spiking NN, a neuromorphic neural network, a binary neural network, or another type of NN), a number of layers associated with the NN, a number of training samples used to train the NN, a number of epochs trained in association with the NN, a mean validation loss associated with the NN (e.g., over a recent number of epochs, such as 100 recent epochs), a mean training loss associated with the NN (e.g., over the recent number of epochs), a number of trainable parameters associated with the NN, a number of non-trainable parameters associated with the NN, an optimizer associated with the NN (e.g., at least one of Adam, Adadelta, or another optimizer), a learning rate associated with the NN, a loss function associated with the NN, an activation function of middle layers of the NN, information identifying dropout layers of the NN, and/or information identifying batch normalization layers of the NN.

The training information associated with the NN may indicate, for example, a signal-to-noise ratio (SNR) range (e.g., from a minimum SNR to a maximum SNR) associated with training the NN; a modulation order range (e.g., from a minimum modulation order to a maximum modulation order) associated with training the NN; a coding scheme range (e.g., from a minimum coding scheme to a maximum coding scheme) associated with training the NN; a number of antennas range (e.g., from a minimum number of antennas to a maximum number of antennas) associated with training the NN; a number of users range (e.g., from a minimum number of users to a maximum number of users) associated with training the NN; channel condition information (e.g., that indicates known, perfect, unknown, or a mix of channel conditions); a number of pilots range (e.g., from a minimum number of pilots to a maximum number of pilots), such as in wireless signals, associated with training the NN; a channel type range (e.g., from all channels being line-of-sight (LOS) to all channels being non-LOS (NLOS); a fast Fourier transform (FFT) size range (e.g., from a minimum FFT size to a maximum FFT size) associated with training the NN; an interference level range (e.g., from a minimum interference level to a maximum interference level) associated with training the NN; a subcarrier spacing range (e.g., from a minimum subcarrier spacing to a maximum subcarrier spacing) associated with training the NN; a carrier frequency range (e.g., from a minimum carrier frequency to a maximum carrier frequency) associated with training the NN; channel type information (e.g., indicating a tapped delay line (TDL), a clustered delay line (CDL), an urban macrocell (UMA), an urban microcell (UMI), a rural microcell (RMS), and/or another channel type) associated with training the NN; a delay spread range (e.g., from a minimum delay spread to a maximum delay spread) associated with training the NN; and/or a Doppler spread range (e.g., from a minimum Doppler spread to a maximum Doppler spread) associated with training the NN.

As shown by reference number 406, the base station testing system may determine one or more test cases for testing the NN (e.g., in a first manner). The one or more tests cases may include, for example, respective test cases for stress testing or generalizability testing of the NN, standardized conformance testing of the NN, sensitivity testing of the NN, and/or adversarial testing of the NN, as further described herein.

In some implementations, the base station testing system may determine the one or more test cases based on information associated with previous testing of another NN by the base station testing system (or by another base station testing system). For example, the base station testing system may identify another NN that was previously tested and may obtain a historical performance report associated with the other NN (e.g., that was generated as a result of previously testing the other NN). The base station testing system may obtain the historical performance report from a data structure (e.g., that is included in and/or that is accessible to the base station testing system). The base station testing system may thereafter identify a plurality of historical test cases indicated by the historical performance report. In some implementations, the base station testing system may determine, using a clustering technique (e.g., a k-medoid clustering technique, or another clustering technique), a plurality of clusters associated with the plurality of historical test cases. The base station testing system then may determine, based on the plurality of clusters, the one or more test cases (e.g., for testing the NN). For example, the base station testing system may identify a centroid associated with each cluster, of the plurality of clusters, and may identify the centroid as a test case.

In some implementations, the base station testing system may determine the one or more test cases based on information associated with a plurality of other NNs previously tested by the base station testing system (or by another base station testing system). For example, the base station testing system may identify a plurality of other NNs that were previously tested and may obtain respective historical performance reports associated with the plurality of other NNs (e.g., that were generated as a result of previously testing the plurality of other NNs). The base station testing system may thereafter identify a plurality of historical test cases indicated by each historical performance report. In some implementations, the base station testing system may normalize the plurality of historical test cases indicated by each historical performance report (e.g., using a feature standardization and normalization technique, which may include use of a machine learning model) to obtain a plurality of normalized historical test cases. Accordingly, the analysis system may determine, using the clustering technique, a plurality of clusters associated with the plurality of normalized historical test cases. The base station then may determine, based on the plurality of clusters, the one or more test cases (e.g., for testing the NN), such as in a similar manner as that described above.

As shown by reference number 408, the base station testing system may determine the one or more test cases (e.g., in a second manner that is different than the first manner). For example, the base station testing system may determine the one or more test cases based on comparing information associated with the NN and information associated with one or more other NNs that were previously tested.

In some implementations, the base station testing system may identify the one or more other NNs that were previously tested and may obtain respective historical model information associated with the one or more other NNs and/or respective historical training information associated with the one or more other NNs (e.g., from a data structure). In some implementations, the base station testing system then may determine, based on at least one of the model information associated with the NN and the training information associated with the NN, and based on at least one of the respective historical model information associated with the one or more other NNs and the respective historical training information associated with the one or more other NNs, whether the NN and at least one other NN, of the one or more other NNs, are similar.

For example, the base station testing system may identify (e.g., using a feature identification technique) features that are associated with the model information associated with the NN and/or the training information associated with the NN and that are associated with the respective historical model information associated with the one or more other NNs and/or the respective historical training information associated with the one or more other NNs. In some implementations, prior to identifying the features, the base station testing system may normalize the respective historical model information associated with the one or more other NNs and/or the respective historical training information associated with the one or more other NNs (e.g., using a feature standardization and normalization technique, which may include use of a machine learning model) to obtain respective normalized historical model information associated with the one or more other NNs and/or the respective normalized historical training information associated with the one or more other NNs. The base station testing system then may normalize the model information associated with the NN and/or the training information associated with the NN (e.g., using a mean and variance obtained from normalizing the respective historical model information associated with the one or more other NNs and/or the respective historical training information associated with the one or more other NNs) to obtain normalized model information associated with the NN and/or normalized training information associated with the NN.

After identifying the features, the base station testing system may process the features, such as by using a principal component analysis (PCA) technique, or another technique, to determine respective values (e.g., eigenvalues, explained variance ratio values, or other values) for the features. The base station testing system then may determine, based on the values, respective weights for the features (e.g., to indicate an importance of each feature).

Accordingly, the base station testing system may determine, using a clustering technique (e.g., an unsupervised clustering technique, such as a k-means clustering technique, a hierarchical clustering technique, or a density-based spatial clustering of applications with noise (DBSCAN) clustering technique) and based on the respective weights for the features, a plurality of clusters associated with the one or more other NNs. The base station testing system then may determine distances (e.g., Euclidean distances) between features associated with the NN and the plurality of clusters and/or similarity metrics (e.g., cosine similarity metrics) between the features associated with the NN and the plurality of clusters.

In some implementations, the base station testing system may determine that the NN and at least one other NN, of the one or more other NNs, are similar based on the distances and/or similarity metrics. For example, when a distance satisfies (e.g., is less than or equal to) a distance threshold (e.g., a maximum distance associated with NNs being similar to each other) and/or a similarity metric satisfies (e.g., is greater than or equal to) a similarity metric threshold (e.g., a minimum similarity metric value associated with NNs being similar to each other), the analysis system may determine that the NN and another NN that corresponds to the distance and/or the similarity metric are similar. The base station testing system then may perform, based on determining that the NN and the at least one other NN are similar, one or more additional operations described herein in relation to Figs. 4A-4B.

In this way, the base station testing system may identify a set of one or more similar other NNs that are similar to the NN, which may include the at least one other NN. In some implementations, the set of one or more similar other NNs may include a quantity (e.g., a particular number) of the one or more other NNs. For example, the set of one or more similar other NNs may include, in addition to, or as an alternative to, the at least one other NN, a quantity (e.g., a particular number X) of the one or more other NNs (e.g., that includes at least X other NNs) that are associated with lowest distances and/or highest similarity metrics of the one or more other NNs.

Accordingly, the base station testing system may obtain respective historical performance reports associated with the set of one or more similar other NNs (e.g., that were generated as a result of previously testing the set of one or more similar other NNs). The base station testing system may thereafter identify a plurality of historical test cases indicated by the respective historical performance reports (e.g., a plurality of historical test cases that were used to test the set of one or more similar other NNs).

The base station testing system then may categorize the plurality of historical test cases. For example, the base station testing system may identify a first category of historical test cases that includes one or more historical test cases, of the plurality of historical test cases, that were indicated to be failed test cases by all of the respective historical performance reports; a second category of historical test cases that includes one or more historical test cases, of the plurality of historical test cases, that were indicated to be failed test cases by more than one, but not all, of the respective historical performance reports; and a third category of historical test cases that includes one or more historical test cases, of the plurality of historical test cases, that were indicated to be failed test cases by the respective historical performance reports, but are not otherwise included in the first category or the second category.

Accordingly, the base station testing system may normalize the plurality of historical test cases (e.g., using a feature standardization and normalization technique, which may include use of a machine learning model) to obtain a plurality of normalized historical test cases. Accordingly, the analysis system may determine, using a clustering technique (e.g., an unsupervised clustering technique, such as a k-means clustering technique, a hierarchical clustering technique, or a DBSCAN clustering technique), a plurality of clusters associated with the plurality of normalized historical test cases. The base station testing system then may determine, for each test case of the first category of historical test cases, a corresponding cluster of the plurality of clusters. The base station testing system then may select, from the first category of historical test cases, a subset of one or more historical test cases that respectively correspond to different clusters of the plurality of clusters (e.g., one historical test case per cluster).

The base station testing system then may test the NN in association with a portion of the plurality of historical test cases. For example, the base station testing system may test the NN with the subset of one or more historical test cases of the first category of test cases, the second category of historical test cases, and/or the third category of historical test cases (collectively referred to hereinafter as a "plurality of representative historical test cases"). The base station testing system may store (e.g., in a data structure) one or more representative historical test cases, of the plurality of representative historical test cases, that the base station testing system determines are failed test cases for the NN. The base station testing system may thereby identify, based on the one or more representative historical test cases and the plurality of historical test cases, to identify a particular similar other NN of the set of one or more similar other NNs. For example, the base station testing system may compare the one or more representative historical test cases and the plurality of historical test cases to identify a particular similar other NN that provided the most similar results with respect to historical test cases as the NN (e.g., the particular similar other NN is associated with a highest amount of indicated failures for the one or more representative historical test cases). In this way, the base station testing system may identify the particular similar other NN as the other similar NN that is the "most" similar to the NN.

The base station then may determine the one or more test cases (e.g., for testing the NN) based on identifying the particular similar other NN. For example, the base station testing system may select, from the first category of historical test cases, the second category of historical test cases, and the third category of historical test cases, a subset of one or more historical test cases that are associated with the particular similar other NN and that respectively correspond to different clusters of the plurality of clusters. Accordingly, the base station testing system may identify the one or more test cases (e.g., for testing the NN) as including the subset of one or more historical test cases that are associated with the particular similar other NN and that respectively correspond to the different clusters of the plurality of clusters.

As further shown in Fig. 4A, and by reference number 410, the base station testing system may determine respective testing conditions associated with the one or more test cases. For example, the base station testing system may determine, for each test case, at least one of: a testing category testing condition of the test case (e.g., whether the test case is for stress testing or generalizability testing of the NN, standardized conformance testing of the NN, sensitivity testing of the NN, and/or adversarial testing of the NN, among other examples), an SNR testing condition, a modulation order testing condition, a coding scheme testing condition, a number of antennas testing condition, a number of users testing condition, a channel condition testing condition, a number of pilots testing condition, a channel type testing condition, an FFT size testing condition, an interference level testing condition, a subcarrier spacing testing condition, a carrier frequency testing condition, a channel type testing condition, a delay spread testing condition, a Doppler spread testing condition, a hardware impairment type testing condition, a hardware impairment level testing condition, a testing sensitivity perturbation testing condition, a testing sensitivity perturbation variance testing condition, an adversarial attack type testing condition, an adversarial attack level testing condition, an adversarial perturbation type testing condition, or an adversarial perturbation level testing condition.

As shown by reference number 412, the base station testing system may generate respective test case data associated with the one or more test cases (e.g., based on the one or more test cases and/or the respective testing conditions associated with the one or more test cases). That is, the base station testing system may generate test case data, for a test case, based on the test case and/or based on the testing conditions associated with the test case.

For example, the base station testing system may identify that a test case, of the one or more test cases, is associated with stress testing or generalizability testing of the NN. Accordingly, the base station testing system may generate, for the test case, test case data associated with at least one of: SNR parameters associated with the AI receiver module of the receiver; stochastic channel parameters (e.g., associated with TDL, CDL, UMA, UMI, or RMS, or other stochastic channel models) associated with the AI receiver module of the receiver; Doppler parameters (e.g., measured in meters per second (m/s)) associated with the AI receiver module of the receiver; delay spread parameters (e.g., measured in nanoseconds (ns)) associated with the AI receiver module of the receiver; interference signal parameters (e.g., interference signal power, measured in decibels (dB)) associated with the AI receiver module of the receiver; subcarrier spacing parameters (e.g., measured in kilohertz (kHz)) associated with the AI receiver module of the receiver; carrier frequency parameters (e.g., measured in Hz) associated with the AI receiver module of the receiver; or FFT size parameters associated with the AI receiver module of the receiver.

As another example, the base station testing system may identify that a test case, of the one or more test cases, is associated with standardized conformance testing of the NN (e.g., with respect to Third Generation Partnership Project (3GPP) standards, or other standards). Accordingly, the base station testing system may generate, for the test case, test case data associated with at least one of: physical downlink shared channel (PDSCH) parameters associated with the AI receiver module of the receiver (e.g., as indicated by 3GPP technical specification (TS) 38.101-4), or physical uplink shared channel (PUSCH) parameters associated with the AI receiver module of the receiver (e.g., as indicated by 3GPP TS 38.141-4).

In an additional example, the base station testing system may identify that a test case, of the one or more test cases, is associated with sensitivity testing of the NN. Accordingly, the base station testing system may generate, for the test case, test case data associated with at least one of: clipping parameters associated with the AI receiver module of the receiver, non-linearity parameters associated with the AI receiver module of the receiver, in-phase and quadrature-phase (IQ) imbalance parameters associated with the AI receiver module of the receiver, phase noise (PN) parameters associated with the AI receiver module of the receiver, carrier frequency offset (CFO) parameters associated with the AI receiver module of the receiver, or sampling clock offset (SCO) parameters associated with the AI receiver module of the receiver. This test case data may be referred to as "hardware impairment" test case data. Additionally, or alternatively, the base station testing system may generate, for the test case, test case data by performing at least one of removing pilot symbols that are included in wireless signals (e.g., to cause pilot wireless signals to be pilotless wireless signals), or increasing noise associated with the pilot symbols that are included in the wireless signals. This test case data may be referred to as "pilot signal perturbation" test case data.

As another example, the base station testing system may identify that a test case, of the one or more test cases, is associated with adversarial testing of the NN. Accordingly, the base station testing system may determine (e.g., based on identifying that the test case is associated with adversarial testing of the NN) direction sensitivity estimation information associated with a wireless signal (e.g., by using an adversarial attack technique, such as a fast gradient sign technique, a one-step target class technique, a basic iterative technique, an iterative least-likely class technique, a projected gradient descent (PGD) attack technique, or a Carlini & Wagner (C&W) attack technique). The base station testing system may determine (e.g., based on the direction sensitivity estimation information associated with the wireless signal) perturbation selection information associated with the wireless signal (e.g., that indicates whether each and every input dimension is to be modified, or whether a particular input dimension is be modified by a particular quantity of input dimensions that are to be perturbed). The base station testing system may therefore generate, for the test case, test case data associated with the wireless signal (e.g., based on the perturbation selection information associated with the wireless signal).

In some implementations, such as after the base station testing system has performed one or more other operations described herein in relation to Figs. 4A-4B (e.g., after the base station testing system has generated a performance report associated with the NN), the base station testing system may perform a model modification operation to update the NN. For example, the base station testing system may perform the modification operation to update the NN based on the test case data associated with the wireless signal (e.g., for the test case associated with adversarial testing of the NN). In this way, the base station testing system may use adversarial "samples" to retrain the NN. In this way, the base station testing system may retrain the NN to be a more robust NN.

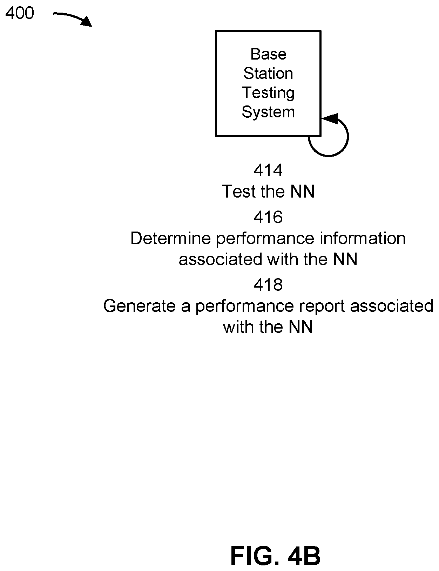

As shown in Fig. 4B, and by reference number 414, the base station testing system may test the NN. For example, the base station testing system may test the NN using the respective test case data associated with the one or more test cases. In this way, the base station testing system may test the NN for each test case of the one or more test cases.

Accordingly, as shown by reference number 416, the base station testing system may determine performance information associated with the NN (e.g., based on testing the NN). That is, the performance information may be determined by the base station testing system as a result of testing the NN. The performance information may indicate, for each test case, of the one or more test cases, at least one of: error performance information (e.g., information associated with a block error rate (BLER), a bit error rate (BER), a symbol error rate (SER), and/or another error metric) associated with the test case, metric performance information (e.g., in terms of latency, throughput, or another type of performance metric) associated with the test case, energy performance (e.g., in terms of an amount of energy consumed) associated with the test case, confidence score information (e.g., information that indicates a level of confidence in an accuracy of a prediction of the NN) associated with the test case, confidence interval information (e.g., information that indicates a variability in the accuracy of the prediction of the NN), or other performance information. When the base station testing system tests the NN multiple times (e.g., $X$ times) for the test case, the confidence interval information may include a confidence interval value (e.g., a 95% confidence interval, which can be described as an average (e.g., a mean) of $X$ predictions plus or minus 1.96 multiplied by a standard deviation of the X predictions divided by a square root of $X$, or more simply as avg(predictions) $\pm$ stddev(predictions)/sqrt($X$)).

In some implementations, when the base station testing system tests the NN over multiple SNR values for a test case, the performance information may indicate, for the test case, at least one of: error floor SNR information (e.g., that identifies an SNR for when an error floor is achieved by the NN) associated with the test case, or break-off SNR information (e.g., that identifies an SNR for which performance of the NN becomes similar or worse to a non-NN based receiver processing approach) associated with the test case.

In some implementations, when the test case is associated with sensitivity testing of the NN or adversarial testing of the NN, the performance information may indicate, for the test case, at least one of: performance reduction information (e.g., information that indicates settings that result in a particular percentage reduction, such as 1%, 5%, 10%, 20%, or 30%, reduction in throughput, or another performance metric, of the NN) associated with the test case, or SNR difference information (e.g., that indicates a difference in SNR when a particular error metric, such as 10% BER, is achieved with and without the settings indicated by the performance reduction information) associated with the test case.

As further shown in Fig. 4B, and by reference number 418, the base station testing system may generate a performance report associated with the NN. The performance report may include, for example, at least one of: the model information associated with the NN (e.g., that was obtained by the base station testing system, as described herein in relation to Fig. 4A and reference number 404), the training information associated with the NN (e.g., that was obtained by the base station testing system, as described herein in relation to Fig. 4A and reference number 404), information indicating the one or more test cases (e.g., that the base station testing system used to test the NN), information indicating the respective testing conditions associated with the one or more test cases (e.g., that the base station testing system used to test the NN), or the performance information (e.g., that the base station testing system determined as a result of testing the NN).

In some implementations, the base station testing system may generate the performance report to include result information. The result information may indicate, for a test case, of the one or more test cases, whether the test case is a passed test case or a failed test case. The base station testing system may determine that the test case is a passed test case, and therefore may generate the result information to indicate that the test case is a passed test case, by determining that an error performance of the NN (e.g., a BLER performance, a BER performance, an SER performance, and/or another error metric performance) associated with the test case is at least a particular percentage (e.g., at least a Y%) improvement over a non-NN based receiver processing approach. Alternatively, the base station testing system may determine that the test case is a failed test case, and therefore may generate the result information to indicate that the test case is a failed test case, by determining that the error performance of the NN associated with the test case is less than a particular percentage (e.g., less than a $Y$%) improvement over a non-NN based receiver processing approach.

In some implementations, the base station testing system may generate the performance report to include other information. In some implementations, the base station testing system may determine the other information based on information associated with previous testing of another NN by the base station testing system (or by another base station testing system).

For example, the base station testing system may identify another NN and may obtain historical model information associated with the other NN, historical training information associated with the other NN, and/or a historical performance report associated with the other NN (e.g., that was generated as a result of previously testing the other NN). In some implementations, the base station testing system may normalize the historical model information, the historical training information, and/or the historical performance report (e.g., in a similar manner as that described elsewhere herein).

In some implementations, the base station testing system may perform, based on at least one of the historical model information, the historical training information, or the historical performance report, a model training operation to train a machine learning model. For example, the base station testing system may train the machine learning model to associate historical test cases (e.g., that are indicated by the historical performance report) with historical performance information (e.g., that is indicated by the historical performance report) and/or with historical result information (e.g., that is indicated by the historical performance report). In some implementations, the model training operation may include using a decision trees technique, a random forest technique, a support vector machine technique, a k-nearest neighbor technique, and/or a naive Bayes technique, among other examples. In some implementations, the base station testing system may utilize a deep-learning-based classifier technique, wherein the base station testing system creates a feedforward neural network with N feedforward layers (e.g., with a rectified linear unit (ReLU) activation function). A last layer of the network may, for example, may represent a single neuron that provides a soft output between zero (0), associated with a failed test case, and one (1), associated with a passed test case. In some implementations, the model training operation may include minimizing a loss, such as a binary cross entropy loss, a Gini impurity and/or a Gini entropy, an aggregated Gini impurity and/or an aggregated Gini entropy, and/or a hinge loss, among other examples.

In some implementations, the base station testing system may determine first estimation information associated with the other NN based on using the machine learning model (e.g., that was trained by the model training operation). For example, the base station testing system may determine the first estimation information based on processing the one or more test cases using the machine learning model. The first estimation information may indicate, for example, first estimated performance information (e.g., that indicates estimated error performance information, estimated metric performance information, estimated energy performance associated with the test case, estimated confidence score information, estimated confidence interval information, or other estimated performance information) associated with the one or more test cases, and/or first estimated result information (e.g., indicating whether a test case is a passed test case or a failed test case) associated with the one or more test cases.

In some implementations, the base station testing system may determine evaluation information based on the first estimation information (and the performance information determined by the base station testing system, as described herein in relation to reference number 416). The evaluation information may indicate, for example, at least one of: confidence value information associated with the machine learning model (e.g., that indicates a percentage of results indicated by the first estimation information that matches corresponding results of the performance information), precision information associated with the machine learning model (e.g., that indicates a ratio of correctly predicted positive results indicated by the first estimation information to a total number of predicted positive results), recall information associated with the machine learning model (e.g., that indicates a ratio of correctly predicted positive results indicated by the first estimation information to a total number of actually positive results), or accuracy information (e.g., that indicates an F-1 score associated with the precision information and the recall information) associated with the machine learning model.

In some implementations, the base station testing system may determine that an evaluation threshold is satisfied (e.g., based on the evaluation information). For example, the base station testing system may determine that an F-1 score indicated by the accuracy information is greater than or equal to the evaluation threshold. In this way, the base station testing system may determine that the machine learning model is sufficiently accurate to be used to model a performance of the NN.

Accordingly, the base station testing system may determine (e.g., based on determining that the evaluation threshold is satisfied) one or more other test cases that are different than the one or more test cases (e.g., that the base station testing system used to test the NN). For example, the base station testing system may determine the one or more other test cases based on the historical performance report associated with the other NN. That is, the base station testing system may compare test cases indicated by the historical performance report and the one or more test cases to identify one or more other test cases, of the test cases indicated by the historical performance report, that are not included in the one or more test cases.

In some implementations, the base station testing system may determine second estimation information associated with the other NN based on using the machine learning model. For example, the base station testing system may determine the second estimation information based on processing the one or more other test cases using the machine learning model. The second estimation information may indicate, for example, second estimated performance information (e.g., that indicates estimated error performance information, estimated metric performance information, estimated energy performance associated with the test case, estimated confidence score information, estimated confidence interval information, or other estimated performance information) associated with the one or more other test cases, and/or second estimated result information (e.g., indicating whether a test case is a passed test case or a failed test case) associated with the one or more other test cases.

Accordingly, the base station testing system may generate the performance report to include (e.g., to also include) the second estimation information. For example, the base station testing system may generate the performance report to include the second estimated performance information and/or the second estimated result information.

As indicated above, Figs. 4A-4B are provided as an example. Other examples may differ from what is described with regard to Figs. 4A-4B. The number and arrangement of devices shown in Figs. 4A-4B are provided as an example. In practice, there may be additional devices, fewer devices, different devices, or differently arranged devices than those shown in Figs. 4A-4B. Furthermore, two or more devices shown in Figs. 4A-4B may be implemented within a single device, or a single device shown in Figs. 4A-4B may be implemented as multiple, distributed devices. Additionally, or alternatively, a set of devices (e.g., one or more devices) shown in Figs. 4A-4B may perform one or more functions described as being performed by another set of devices shown in Figs. 4A-4B.

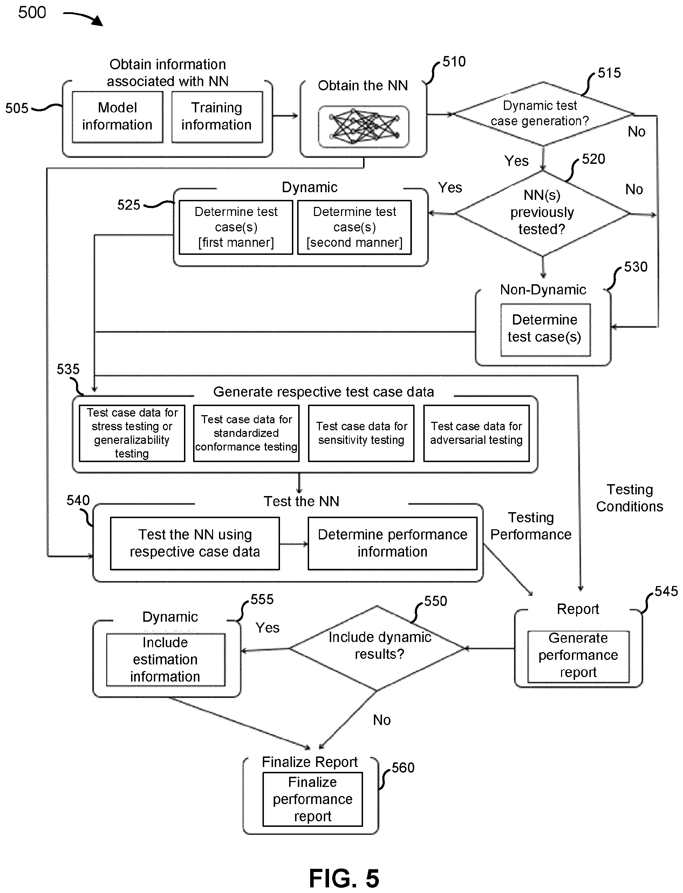

Fig. 5 is a flowchart of an example process 500 associated with a base station testing system configured to test an NN of an AI module of a receiver. In some implementations, one or more process blocks of Fig. 5 are performed by a base station testing system (e.g., the base station testing system 210). In some implementations, one or more process blocks of Fig. 5 are performed by another device or a group of devices separate from or including the management system, such as a base station (e.g., the base station 220) and/or a UE (e.g. the UE 230). Additionally, or alternatively, one or more process blocks of Fig. 5 may be performed by one or more components of device 300, such as processor 320, memory 330, input component 340, output component 350, and/or communication component 360.

As shown in Fig. 5, process 500 includes obtaining information associated with an NN of an AI receiver module of a receiver (block 505). For example, the base station testing system may obtain information associated with an NN (e.g., the NN 133) of an AI receiver module (e.g., the AI receiver module 131) of a receiver (e.g., the receiver 115), as described herein. The receiver may be included in a base station (e.g., the base station 220). In some implementations, as further shown in Fig. 5, the base station testing system may obtain model information associated with the NN and/or may obtain training information associated with the NN (e.g., as described herein in relation to Fig. 4A and reference number 404).

As shown in Fig. 5, process 500 includes obtaining the NN (block 510). For example, the base station testing system may obtain the NN, as described herein. The base station testing system may obtain the NN from the base station or a data structure (e.g., as described herein in relation to Fig. 4A and reference number 402). The NN may be (or may include) a neural network, a spiking neural network, a neuromorphic neural network, a binary neural network, and/or another kind of neural network. The NN may be a trained NN (e.g., that was trained using the training information).

As shown in Fig. 5, process 500 includes determining whether dynamic test case generation is enabled (block 515). For example, the base station testing system may determine whether dynamic test case generation is enabled by determining whether a dynamic test case generation configuration setting is set. When the base station testing system determines that dynamic test case generation is enabled, process 500 then may include performing block 520. Alternatively, when the base station testing system determines that dynamic test case generation is not enabled, process 500 then may include performing block 530 (and may not include blocks 520 and 525).

As shown in Fig. 5, process 500 include determining whether one or more other NNs were previously tested (block 520). For example, the base station testing system may determine whether one or more other NNs were previously tested (e.g., by the base station testing system or another base station testing system), as described herein. When the base station testing system determines that one or more other NNs were previously tested, process 500 then may include performing block 525. Alternatively, when the base station testing system determines that one or more other NNs were not previously tested, process 500 then may include performing block 530.

As shown in Fig. 5, process 500 includes dynamically determining one or more test cases for testing the NN (block 525). For example, the base station testing system may dynamically determine one or more test cases for testing the NN, as described herein. The base station testing system may dynamically determine the one or more test cases for testing the NN in a first manner (e.g., as described herein in relation to Fig. 4A and reference number 406) and/or in a second manner (e.g., as described herein in relation to Fig. 4A and reference number 408).

In some implementations, to determine the one or more test cases, the base station testing system may identify another NN that was previously tested; obtain a historical performance report associated with the other NN; identify a plurality of historical test cases indicated by the historical performance report; determine, using a clustering technique and based on the plurality of historical test cases, a plurality of clusters associated with the plurality of historical test cases; and determine, based on the plurality of clusters, the one or more test cases.

In some implementations, to determine the one or more test cases, the base station testing system may identify one or more other NNs that were previously tested; obtain respective historical model information associated with the one or more other NNs and respective historical training information associated with the one or more other NNs; identify, based on at least one of the model information associated with the NN and the training information associated with the NN, and based on at least one of the respective historical model information associated with the one or more other NNs and the respective historical training information associated with the one or more other NNs, a set of one or more similar other NNs that are similar to the NN; identify a plurality of historical test cases that were used to test the set of one or more similar other NNs; determine, using a clustering technique, a plurality of clusters associated with the plurality of historical test cases;

identify, based on testing the NN in association with a portion of the plurality of historical test cases, and based on determining the plurality of clusters associated with the plurality of historical test cases, a particular similar other NN of the set of one or more similar other NNs; and determine, based on identifying the particular similar other NN, the one or more test cases.

As shown in Fig. 5, process 500 includes non-dynamically determining one or more test cases for testing the NN (block 530). For example, the base station testing system may non-dynamically determine one or more test cases for testing the NN, as described herein. For example, the base station testing system may determine the one or more test cases to include respective test cases for stress testing or generalizability testing of the NN, standardized conformance testing of the NN, sensitivity testing of the NN, and adversarial testing of the NN.

As shown in Fig. 5, process 500 includes generating respective test case data associated with the one or more test cases (block 535). For example, the base station testing system may generate respective test case data associated with the one or more test cases, as described herein. In some implementations, the base station testing system may determine respective testing conditions associated with the one or more test cases, and may generate the respective test case data based on the one or more test cases and/or the respective testing conditions (e.g., as described herein in relation to Fig. 4A and reference numbers 410 and 412).

In some implementations, to generate the respective test case data associated with the one or more test cases, the base station testing system may identify that a test case, of the one or more test cases, is associated with stress testing or generalizability testing of the NN; and generate, for the test case, test case data associated with at least one of: SNR parameters associated with the AI receiver module of the receiver, stochastic channel parameters associated with the AI receiver module of the receiver, Doppler parameters associated with the AI receiver module of the receiver, delay spread parameters associated with the AI receiver module of the receiver, interference signal parameters associated with the AI receiver module of the receiver, subcarrier spacing parameters associated with the AI receiver module of the receiver, carrier frequency parameters associated with the AI receiver module of the receiver, or FFT size parameters associated with the AI receiver module of the receiver.

In some implementations, to generate the respective test case data associated with the one or more test cases, the base station testing system may identify that a test case, of the one or more test cases, is associated with sensitivity testing of the NN; and generate, for the test case, test case data associated with at least one of: clipping parameters associated with the AI receiver module of the receiver, non-linearity parameters associated with the AI receiver module of the receiver, IQ imbalance parameters associated with the AI receiver module of the receiver, PN parameters associated with the AI receiver module of the receiver, CFO parameters associated with the AI receiver module of the receiver, or SCO parameters associated with the AI receiver module of the receiver.

In some implementations, to generate the respective test case data associated with the one or more test cases, the base station testing system may identify that a test case, of the one or more test cases, is associated with sensitivity testing of the NN; and generate, for the test case, test case data by performing at least one of: removing pilot symbols that are included in wireless signals, or increasing noise associated with the pilot symbols that are included in the wireless signals.

In some implementations, to generate the respective test case data associated with the one or more test cases, the base station testing system may identify that a test case, of the one or more test cases, is associated with adversarial testing of the NN; determine, based on identifying that the test case is associated with adversarial testing of the NN, direction sensitivity estimation information associated with a wireless signal; determine, based on the direction sensitivity estimation information associated with the wireless signal, perturbation selection information associated with the wireless signal; and generate, for the test case, and based on the perturbation selection information associated with the wireless signal, test case data associated with the wireless signal. Process 500 may also include performing, based on the test case data associated with the wireless signal, a model modification operation to update the NN.

As shown in Fig. 5, process 500 includes testing the NN (block 540). For example, the base station testing system may test the NN, as described herein. In some implementations, the base station testing system may test the NN using the respective test case data associated with the one or more test cases (e.g., as described herein in relation to Fig. 4B and reference number 414). Accordingly, the base station testing system may determine performance information associated with the NN, such as a result of testing the NN (e.g., as described herein in relation to Fig. 4B and reference number 416).

As shown in Fig. 5, process 500 includes generating a performance report associated with the NN (block 545). For example, the base station testing system may generate a performance report associated with the NN, as described herein. The performance report may include, for example, at least one of: the model information associated with the NN, the training information associated with the NN, information indicating the one or more test cases, information indicating the respective testing conditions associated with the one or more test cases, the performance information, or result information (e.g., that indicates, for a test case, of the one or more test cases, whether the test case is a passed test case or a failed test case), such as described herein in relation to Fig. 4B and reference number 418.

As shown in Fig. 5, process 500 include determining whether the performance report should include dynamic results (block 550). For example, the base station testing system may determine whether the performance report should include dynamic results by determining whether a dynamic results configuration setting is set. When the base station testing system determines that the performance report should include dynamic results, process 500 then may include performing block 555. Alternatively, when the base station testing system determines that the performance report should not include dynamic results, process 500 then may include performing block 560 (and may not include performing block 555).

As shown in Fig. 5, process 500 include generating the performance report to include estimation information (block 555). For example, the base station testing system may generate the performance report to include estimation information, as described herein. In some implementations, the base station testing system may determine the estimation information using a machine learning model (e.g., as described herein in relation to Fig. 4B and reference number 416).

In some implementations, to generate the performance report to include estimation information, the base station testing system may identify another NN that was previously tested; obtain historical model information associated with the other NN, historical training information associated with the other NN, and a historical performance report associated with the other NN; perform, based on at least one of the historical model information, the historical training information, or the historical performance report, a model training operation to train a machine learning model to associate historical test cases with historical performance information; determine, based on processing the one or more test cases using the machine learning model, first estimation information associated with the other NN; determine, based on the performance information and the first estimation information, evaluation information that indicates at least one of: confidence value information associated with the machine learning model, precision information associated with the machine learning model, recall information associated with the machine learning model, or accuracy information associated with the machine learning model; determine, based on the evaluation information, that an evaluation threshold is satisfied; determine, based on determining that the evaluation threshold is satisfied and based on the historical performance report, one or more other test cases that are different than the one or more test cases; determine, based on processing the one or more other test cases using the machine learning model, second estimation information associated with the other NN; and generate the performance report to include the second estimation information.

As shown in Fig. 5, process 500 include finalizing the performance report (block 560). For example, the base station testing system may finalize the performance report to allow the performance report to be provided for review (e.g., by an operator of the base station testing system).

Although Fig. 5 shows example blocks of process 5, in some implementations, process 5 includes additional blocks, fewer blocks, different blocks, or differently arranged blocks than those depicted in Fig. 5. Additionally, or alternatively, two or more of the blocks of process 5 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

### Claims

1. A base station testing system, comprising:

   one or more memories; and
   one or more processors, communicatively coupled to the one or more memories, configured to:

   obtain model information associated with a neural network, NN, of an artificial intelligence, AI, receiver module of a receiver;
   obtain training information associated with the NN;
   obtain the NN;
   determine one or more test cases for testing the NN;
   determine respective testing conditions associated with the one or more test cases;
   generate, based on the respective testing conditions, respective test case data associated with the one or more test cases;
   determine, based on testing the NN using the respective test case data associated with the one or more test cases, performance information associated with the NN; and
   generate, based on determining the performance information, a performance report associated with the NN.

2. The base station testing system of claim 1, wherein the performance report includes at least one of:

   the model information,
   the training information,
   information indicating the one or more test cases,
   information indicating the respective testing conditions associated with the one or more test cases,
   the performance information, or
   result information.

3. The base station testing system of claim 1 or claim 2, wherein the one or more processors, to determine the one or more test cases, are configured to:

   identify another NN that was previously tested;
   obtain a historical performance report associated with the other NN;
   identify a plurality of historical test cases indicated by the historical performance report;
   determine, using a clustering technique and based on the plurality of historical test cases, a plurality of clusters associated with the plurality of historical test cases; and
   determine, based on the plurality of clusters, the one or more test cases.

4. The base station testing system of any preceding claim, wherein the one or more processors, to determine the one or more test cases, are configured to:

identify one or more other NNs that were previously tested;

obtain respective historical model information associated with the one or more other NNs and respective historical training information associated with the one or more other NNs;

identify, based on at least one of the model information associated with the NN and the training information associated with the NN, and based on at least one of the respective historical model information associated with the one or more other NNs and the respective historical training information associated with the one or more other NNs, a set of one or more similar other NNs that are similar to the NN;

identify a plurality of historical test cases that were used to test the set of one or more similar other NNs;

determine, using a clustering technique, a plurality of clusters associated with the plurality of historical test cases;

identify, based on testing the NN in association with a portion of the plurality of historical test cases, and based on determining the plurality of clusters associated with the plurality of historical test cases, a particular similar other NN of the set of one or more similar other NNs; and

determine, based on identifying the particular similar other NN, the one or more test cases.

5.  The base station testing system of any preceding claim, wherein the one or more processors, to generate the respective test case data associated with the one or more test cases, are configured to:

identify that a test case, of the one or more test cases, is associated with stress testing or generalizability testing of the NN; and

generate, for the test case, test case data associated with at least one of:

SNR parameters associated with the AI receiver module of the receiver,

stochastic channel parameters associated with the AI receiver module of the receiver,

Doppler parameters associated with the AI receiver module of the receiver,

delay spread parameters associated with the AI receiver module of the receiver,

interference signal parameters associated with the AI receiver module of the receiver,

subcarrier spacing parameters associated with the AI receiver module of the receiver,

carrier frequency parameters associated with the AI receiver module of the receiver, or

fast Fourier transform, FFT, size parameters associated with the AI receiver module of the receiver.

6.  The base station testing system of any preceding claim, wherein the one or more processors, to generate the respective test case data associated with the one or more test cases, are configured to:

identify that a test case, of the one or more test cases, is associated with sensitivity testing of the NN; and

generate, for the test case, test case data associated with at least one of:

clipping parameters associated with the AI receiver module of the receiver,

non-linearity parameters associated with the AI receiver module of the receiver,

in-phase and quadrature-phase, IQ, imbalance parameters associated with the AI receiver module of the receiver,

phase noise, PN, parameters associated with the AI receiver module of the receiver,

carrier frequency offset, CFO, parameters associated with the AI receiver module of the receiver, or

sampling clock offset, SCO, parameters associated with the AI receiver module of the receiver.

7.  The base station testing system of any preceding claim, wherein the one or more processors, to generate the respective test case data associated with the one or more test cases, are configured to:

identify that a test case, of the one or more test cases, is associated with sensitivity testing of the NN; and

generate, for the test case, test case data by performing at least one of:

removing pilot symbols that are included in wireless signals, or

increasing noise associated with the pilot symbols that are included in the wireless signals,

and/or

wherein the one or more processors, to generate the respective test case data associated with the one or more test cases, are configured to:

identify that a test case, of the one or more test cases, is associated with adversarial testing of the NN;

determine, based on identifying that the test case is associated with adversarial testing of the NN, direction sensitivity estimation information associated with a wireless signal;

determine, based on the direction sensitivity estimation information associated with the wireless signal, perturbation selection information associated with the wireless signal; and

generate, for the test case, and based on the perturbation selection information associated with the wireless signal, test case data associated with the wireless signal,

and optionally wherein the one or more processors are further configured to:

perform, based on the test case data associated with the wireless signal, a model modification operation to update the NN.

8. The base station testing system of any preceding claim, wherein the one or more processors, to generate the performance report, are configured to:

identify another NN that was previously tested;

obtain historical model information associated with the other NN, historical training information associated with the other NN, and a historical performance report associated with the other NN;

perform, based on at least one of the historical model information, the historical training information, or the historical performance report, a model training operation to train a machine learning model to associate historical test cases with historical performance information;

determine, based on processing the one or more test cases using the machine learning model, first estimation information associated with the other NN;

determine, based on the performance information and the first estimation information, evaluation information that indicates at least one of:

confidence value information associated with the machine learning model,
precision information associated with the machine learning model,
recall information associated with the machine learning model, or
accuracy information associated with the machine learning model;

determine, based on the evaluation information, that an evaluation threshold is satisfied;

determine, based on determining that the evaluation threshold is satisfied and based on the historical performance report, one or more other test cases that are different than the one or more test cases;

determine, based on processing the one or more other test cases using the machine learning model, second estimation information associated with the other NN; and

generate the performance report to include the second estimation information.

9. A base station testing system, comprising:
one or more processors configured to:

determine one or more test cases for testing a neural network, NN, of an artificial intelligence, AI, receiver module of a receiver;

generate respective test case data associated with the one or more test cases;

determine, based on testing the NN using the respective test case data associated with the one or more test cases, performance information associated with the NN; and

generate, based on determining the performance information, a performance report associated with the NN.

10. The base station testing system of claim 9, wherein the one or more processors, to determine the one or more test cases, are configured to:

obtain a historical performance report associated with another NN that was previously tested;

determine, using a clustering technique and based on a plurality of historical test cases indicated by the historical performance report, a plurality of clusters associated with the plurality of historical test cases; and

determine, based on the plurality of clusters, the one or more test cases,

and/or

wherein the one or more processors, to determine the one or more test cases, are configured to:

identify a set of one or more similar other NNs that are similar to the NN;

identify a plurality of historical test cases that were used to test the set of one or more similar other NNs; and

determine, based on testing the NN in association with a portion of the plurality of historical test cases, and based on determining a plurality of clusters associated with the plurality of historical test cases, the one or more test cases.

11. The base station testing system of claim 9 or claim 10, wherein the one or more processors, to generate the respective test case data associated with the one or more test cases, are configured to:

generate, for a test case, of the one or more test cases, test case data by performing at least one of:

removing pilot symbols that are included in wireless signals, or

increasing noise associated with the pilot symbols that are included in the wireless signals.

12. The base station testing system of any of claims 9 to 11, wherein the one or more processors, to generate the respective test case data associated with the one or more test cases, are configured to:

determine direction sensitivity estimation information associated with a wireless signal;

determine, based on the direction sensitivity estimation information associated with the wireless signal, perturbation selection information associated with the wireless signal; and

generate, for a test case, of the one or more test cases, and based on the perturbation selection information associated with the wireless signal, test case data associated with the wireless signal,

and optionally wherein the one or more processors are further configured to:

perform, based on the test case data associated with the wireless signal, a model modification operation to update the NN.

13. The base station testing system of any of claims 9 to 12, wherein the one or more processors, to generate the performance report, are configured to:

identify another NN that was previously tested;

perform, based on identifying the other NN, a model training operation to train a machine learning model to associate historical test cases with historical performance information;

determine, based on processing the one or more test cases using the machine learning model, first estimation information associated with the other NN;

determine, based on the performance information and the first estimation information, that an evaluation threshold associated with the machine learning model is satisfied;

determine, based on determining that the evaluation threshold is satisfied and based on a historical performance report associated with the other NN, one or more other test cases that are different than the one or more test cases;

determine, based on processing the one or more other test cases using the machine learning model, second estimation information associated with the other NN; and

generate the performance report to include the second estimation information.

14. A method, comprising:

determining, by a base station testing system, one or more test cases for testing a neural network, NN, of an artificial intelligence, AI, receiver module of a receiver;

determining, by the base station testing system, respective testing conditions associated with the one or more test cases;

generating, by the base station testing system and based on the respective testing conditions, respective test case data associated with the one or more test cases;

determining, by the base station testing system and based on testing the NN using the respective test case data associated with the one or more test cases, performance information associated with the NN; and

generating, by the base station testing system and based on determining the performance information, a performance report associated with the NN.

15. The method of claim 14, wherein determining the one or more test cases comprises:

obtaining a historical performance report associated with another NN that was previously tested;

determining a plurality of clusters associated with a plurality of historical test cases associated with the other NN;

and
determining, based on the plurality of clusters, the one or more test cases,
and/or

wherein generating the performance report comprises:

performing, based on identifying another NN that was previously tested, a model training operation to train a machine learning model to associate historical test cases with historical performance information;
determining, based on a historical performance report associated with the other NN, one or more other test cases that are different than the one or more test cases;
determining, based on processing the one or more other test cases using the machine learning model, estimation information associated with the other NN; and
generating the performance report to include the estimation information.

**FIG. 1**

200

Base Station
Testing
System
210

Base
Station
220

UE
230

Network 240

**FIG. 2**

EP 4 715 677 A1

**FIG. 3**

EP 4 715 677 A1

Base
Station

AI
Reciver
Module

NN

402
NN

404
Model information associated with the NN
and/or training information associated with the NN

Base
Station
Testing
System

406
Determine one or more test cases for
testing the NN (first manner)

408
Determine one or more test cases for
testing the NN (second manner)

410
Determine respective testing conditions
associated with the one or more test cases

412
Generate respective test case data
associated with the one or more test cases

FIG. 4A

EP 4 715 677 A1

400

Base Station Testing System

414
Test the NN

416
Determine performance information associated with the NN

418
Generate a performance report associated with the NN

**FIG. 4B**

EP 4 715 677 A1

FIG. 5

Europäisches
Patentamt

European
Patent Office

Office européen
des brevets

# EUROPEAN SEARCH REPORT

**Application Number**

EP 25 19 5703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 816 806 A1 (ACCENTURE GLOBAL SOLUTIONS LTD [IE]) 5 May 2021 (2021-05-05) * the whole document * | 1-15 | INV. G06N3/094 ADD. G06N20/00 |
| X | CN 114 579 430 A (CHINESE PEOPLE LIBERATION ARMY AND LAND ARMY ENGINEERING UNIV) 3 June 2022 (2022-06-03) * the whole document * | 1-15 | |

**TECHNICAL FIELDS SEARCHED (IPC)**

G06N
H04L
H04W
H04B

The present search report has been drawn up for all claims

| Place of search | Date of completion of the search | Examiner |
|---|---|---|
| The Hague | 22 January 2026 | Papadakis, Georgios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 5703

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | | Publication date | Patent family member(s) | | Publication date |
|---|---|---|---|---|---|
| EP 3816806 | A1 | 05-05-2021 | EP | 3816806 A1 | 05-05-2021 |
| | | | US | 10949337 B1 | 16-03-2021 |
| CN 114579430 | A | 03-06-2022 | NONE | | |

EPO FORM P0459

For more details about this annex : see Official Journal of the European Patent Office, No. 12/82